## Europäisches Patentamt

## European Patent Office

## Office européen des brevets

(19)

(11) Veröffentlichungsnummer: **0 176 791 B1**

(12)

# EUROPÄISCHE PATENTSCHRIFT

(45) Veröffentlichungstag der Patentschrift:
**16.08.89**

(51) Int. Cl.⁴: **G06F 13/14**

(21) Anmeldenummer: **85111116.1**

(22) Anmeldetag: **03.09.85**

(54) **Schaltungsanordnung zur Auswertung von asynchron auftretenden Anforderungen wenigstens zweier verschiedener Einrichtungen für eine gemeinsame Einrichtung.**

(30) Priorität: **04.09.84 DE 3432477**

(43) Veröffentlichungstag der Anmeldung:
**09.04.86 Patentblatt 86/15**

(45) Bekanntmachung des Hinweises auf die Patenterteilung:
**16.08.89 Patentblatt 89/33**

(84) Benannte Vertragsstaaten:
**AT BE CH DE FR GB IT LI NL SE**

(56) Entgegenhaltungen:
**DE-A- 1 487 826**
**GB-A- 1 217 355**
**US-A- 4 162 529**
**US-A- 4 339 808**

(73) Patentinhaber: **Siemens Aktiengesellschaft, Wittelsbacherplatz 2, D-8000 München 2(DE)**

(72) Erfinder: **Bräuer, Gerald, Dipl.-Ing., Robert-Koch-Strase 2, D-8012 Ottobrunn(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt. wenn die Einspruchsgebühr entrichtet worden ist (Art. 99(1) Europäisches Patentübereinkommen).

**Beschreibung**

Die Erfindung betrifft eine Schaltungsanordnung zur Auswertung von asynchron auftretenden Anforderungen entsprechend dem Oberbegriff des Patentanspruches 1.

Derartige Schaltungsanordnungen sind allgemein bekannt, z.B. durch die DE-PS 12 92 164, DE-AS 14 87 826 oder DE-PS 28 34 128. Sie werden insbesondere in datenverarbeitenden Anlagen immer dann benötigt, wenn mehrere verschiedene Einrichtungen Daten an eine gemeinsame Einrichtung absetzen wollen, z.B. zur Übergabe der von Ein-/Ausgabewerken oder dem Arbeitsspeicher einer Datenverarbeitungsanlage zur Verfügung gestellten Adressenparameter an einen Cache-Speicher.

Die bekannten, ohne festen Steuertakt arbeitenden Schaltungsanordnungen verwenden alle anforderungsindividuelle Speicherkippstufen zum Abfangen und Zwischenspeichern der Anforderungen, die in einer Eingangsstufe zusammengefaßt sind, an die ein Auswahlnetzwerk und eine Steuerschaltung zur Ableitung der benötigten internen Steuersignale angeschlossen ist.

Die Erfindung bezweckt eine Schaltungsanordnung, bei der der Aufwand an Speicherkippstufen für die zu überwachenden Anforderungsquellen möglichst gering gehalten ist.

Diese Aufgabe wird gemäß der Erfindung durch die kennzeichnenden Merkmale des Patentanspruches 1 gelöst.

Die Erfindung macht sich dabei zunutze, daß Identitätsmarkierungen für die Auswahl eines Datenpfades vielfach in binär codierter Form benötigt werden. Es werden daher nicht die in Form einer "1 aus n"-Markierung vorliegenden Anforderungen vorübergehend abgespeichert, sondern nur die abgeleiteten codierten Identitätsmarkierungen. Lediglich für die Überwachung aller Anforderungssignale und zur Erzeugung der notwendigen Steuersignale wird eine zusätzliche Steuerkippstufe eingesetzt, die sich nach Übernahme einer Anforderung vorübergehend selbst sperrt, um die erkannte und in den Markierkippstufen zwischengespeicherte Anforderung absetzen zu können.

Durch die Überlagerung des Setzausgangssignales dieser Steuerkippstufe mit dem durch Verzögerung davon abgeleiteten Rücksetzsignal wird jeweils eine nur durch Laufzeiten bedingte vorübergehende Sperrung der Steuerkippstufe im Eigentakt bewirkt, der an die verschiedenen Randbedingungen, z.B. an die benötigte Dauer für die Durchführung der jeweils durch die Anforderung ausgelösten Steuerfunktionen, leicht angepaßt werden kann.

Bei Überwachung nur zweier verschiedener Anforderungen gemäß Patentanspruch 3 benötigt man neben der Steuerkippstufe nur noch eine Markierkippstufe, so daß die Schaltungsanordnung gegenüber den bekannten Anordnungen zunächst keine Einsparung an Speicherkippstufen mit sich bringt. Steigt jedoch die Anzahl der möglichen Anforderungen, so wirkt sich die durch das neue Lösungsprinzip gegebene Einsparungsmöglichkeit immer stärker aus. Das gemäß Patentanspruch 4 notwendige Prioritätsnetzwerk mit nachgeschaltetem Codierer ist dann zwischen den Anforderungsleitungen und den Dateneingängen der Markier- Kippstufen einzufügen, wobei das Setzausgangssignal der Steuerkippstufe zum Einstellen der Markierkippstufen so zu verzögern ist, daß die Signallaufzeiten durch die vorgeschalteten Netzwerke ausreichend überbrückt werden.

Muß damit gerechnet werden, daß zwischen den eintreffenden Anforderungen nicht ein ein einwandfreies Arbeiten der Anordnung sichernder Mindestabstand eingehalten wird, dann schaffen Weiterbildungen entsprechend den Patentansprüchen 6 und 7 Abhilfe, indem die Freigabe des Übernahmesignales zusätzlich von einer Kontrolle der markierten Anforderung auf Übereinstimmung mit dem zugehörigen Anforderungssignal abhängig gemacht wird.

Einzelheiten der Erfindung seien nachfolgend anhand eines in der Zeichnung dargestellten Ausführungsbeispieles näher erläutert. Im einzelnen zeigen

FIG 1 ein Übersichtsschaltbild zur Durchschaltung der Datenpfade mehrerer Datenquellen zu einer gemeinsamen Einrichtung,

FIG 2 die erfindungsgemäße Schaltungsanordnung für die Auswahl- und Durchschaltesteuerung von FIG 1 und

FIG 3 ein zugehöriges Impulsdiagramm zur Verdeutlichung der Arbeitsweise.

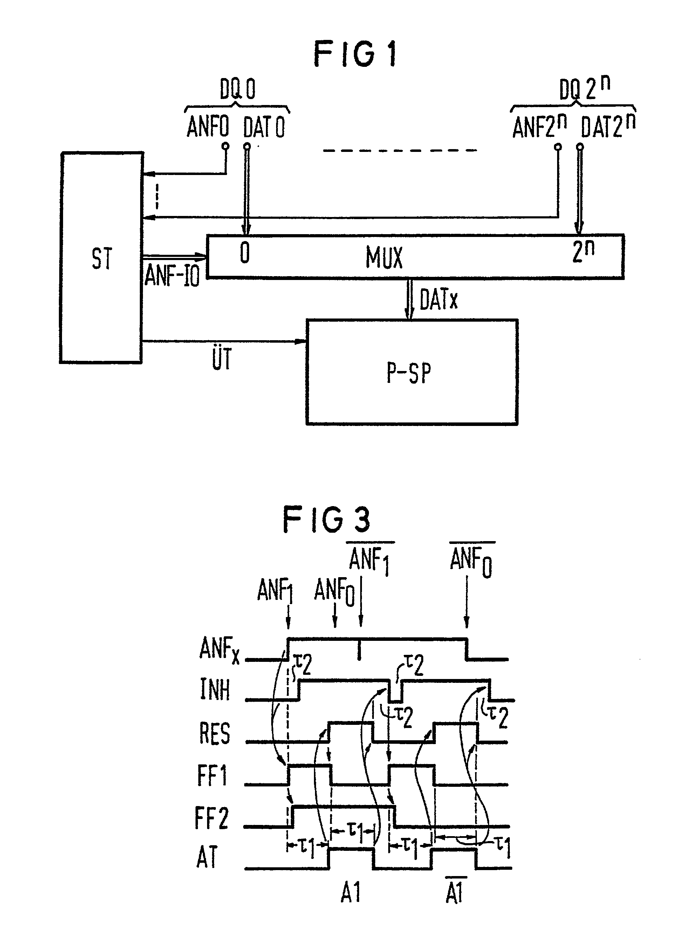

Das in FIG 1 dargestellte Übersichtsschaltbild zeigt in Anlehnung an den Stand der Technik eine zentrale Einrichtung, z.B. einen Pufferspeicher P-SP, der von verschiedenen Datenquellen, z.B. verschiedenen Speicher- und Steuerwerken DQ0 bis DQ2$^n$ einer Datenverarbeitungsanlage, aus über einen Auswahlschalter MUX ansteuerbar ist, um Daten und/oder Adressen DAT zu übernehmen. Die Zugriffswünsche der einzelnen Datenquellen werden durch zusätzliche Anforderungssignale, z.B. ANF0, der Auswahl- und Durchschaltesteuerung ST mitgeteilt, die dann in an sich bekannter Weise die Identität einer der vorliegenden Anforderungen ermittelt und anhand dieser Anforderungsidentität ANF-ID den Auswahlschalter MUX einstellt, so daß der entsprechende Datenpfad zur gemeinsamen Einrichtung P-SP durchgeschaltet wird. Außerdem wird ein Übernahmesignal ÜT ausgelöst, das der gemeinsamen Einrichtung P-SP anzeigt, daß die am Eingang bereitgestellten Daten DATx übernommen werden können. Liegen am Ende des Übernahmesignals ÜT noch weitere Anforderungen vor, so werden diese nacheinander in gleicher Weise behandelt, wobei infolge der Eigentaktung die Übernahmeimpulse ÜT periodisch wiederkehren, bis alle Anforderungen berücksichtigt sind.

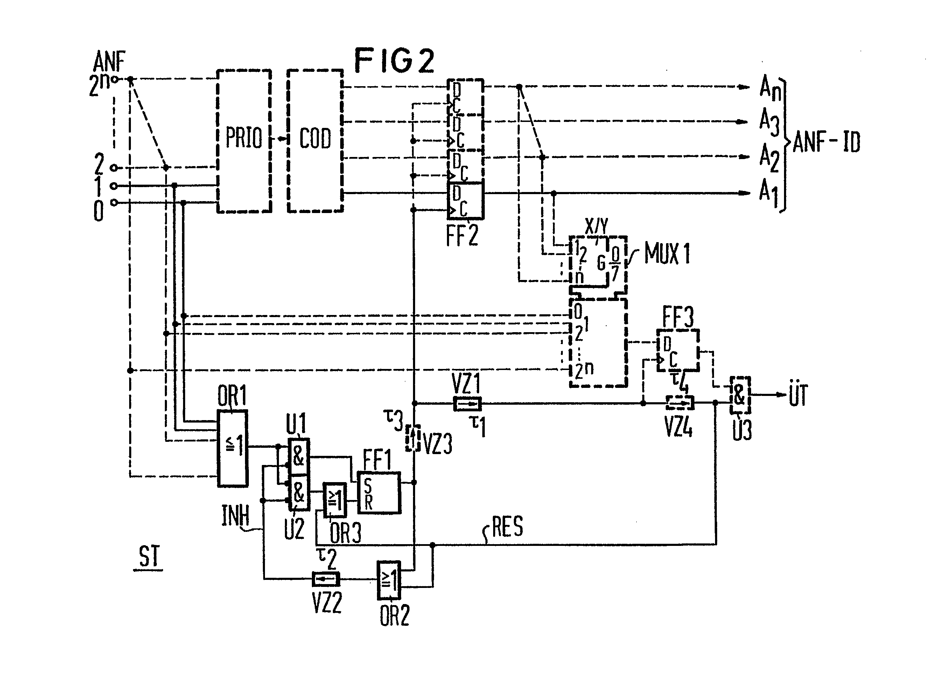

FIG 2 zeigt im einzelnen die gemäß der Erfindung für die Auswahl- und Durchschaltesteuerung ST von FIG 1 vorgesehene Schaltungsanordnung, die sich in zwei Teile gliedert, von denen der eine als oberer Teil der Figur den Schaltungsteil für die Ableitung der Anforderungsidentitäten ANF-ID und der andere als unterer Teil der Figur den Schaltungsteil für die Ableitung der benötigten Steuersignale einschließlich des Übernahmesignales ÜT umfaßt. Zunächst sei lediglich der ausgezogene Teil der Schaltungsanordnung erläutert: Alle Anforderungsleitungen ANF0 bis ANF$2^n$ sind mit entsprechenden Eingängen eines ODER-Gliedes OR1 verbunden, das überwacht, ob überhaupt eine Anforderung vorliegt und demzufolge die Auswahl- und Durchschaltesteuerung wirksam zu schalten ist.

Liegt eine Anforderung vor, so greift sie im Ruhezustand der Steuerungsschaltung ST über das UND-Glied U1 auf den Setzeingang S der Steuerkippstufe FF1 durch und setzt diese, so daß der Steuerungsablauf in Gang gesetzt wird:

Das am Setzausgang Q der Steuerkippstufe FF1 auftretende Setzausgangssignal sichert einerseits mit seiner Vorderflanke durch entsprechende Einstellung der Markierkippstufen FF2 die Identität der ausgewählten Anforderung, wobei unterstellt sei, daß die Anforderung ANF1 als bevorzugte Anforderung auf den Dateneingang wirkt, so daß die Markierkippstufe FF2 in gesetztem Zustand die Anforderung ANF1 und im ungesetzten Zustand die Anforderung ANF0 am Ausgang A1 kennzeichnet.

Andererseits wirkt das Setzausgangssignal über das ODER- Glied OR2 auf den Eingang der Steuerkippstufe FF1 zurück und sperrt mit leichter Verzögerung $\tau_2$ durch das Verzögerungsglied VZ2 als Signal INH die UND-Glieder U1 und U2, so daß das Ausgangssignal des ODER-Gliedes OR1 vorübergehend ohne Einfluß auf die Steuerkippstufe FF1 und damit auf den weiteren Steuerungsablauf ist.

Weiterhin wird das Setzausgangssignal über die Verzögerungsstufe VZ1 geleitet und löst um die Dauer $\tau_1$ verzögert das Übernahmesignal ÜT sowie das Rücksetzsignal RES aus, das unabhängig vom Sperrsignal INH über das ODER-Glied OR3 unmittelbar auf den Rücksetzeingang R einwirkt und die Steuerkippstufe FF1 zurücksetzt. Außerdem wird das Rücksetzsignal RES über das ODER- Glied OR2 auch zum Sperrsignal INH und dieses entsprechend verlängert, obwohl die Steuerkippstufe FF1 bereits zurückgesetzt ist.

Mit Rücksetzen der Steuerkippstufe FF1 durchläuft die Rückflanke des Setzausgangssignales in gleicher Weise die Verzögerungsstufe VZ1 und beendet sowohl die Übernahme- als auch das Rücksetzsignal - ÜT und RES, so daß auch das Sperrsignal INH durch die Verzögerungsstufe VZ2 verzögert entfällt. Die Steuerung ST befindet sich damit wieder im Ausgangszustand, und durch erneutes Setzen der Steuerkippstufe FF1 über das ODER-Glied OR1 und das UND-Glied U1 kann eine weitere Anforderung berücksichtigt werden.

FIG 3 zeigt ein zugehöriges Impulsdiagramm zum besseren Verständnis des Steuerungsablaufes und des Einflusses der Verzögerungszeiten.

Mit der Anforderung ANF1 wird beispielsweise über das ODER-Glied OR1 die Steuerkippstufe FF1 und unmittelbar danach die Markierstufe FF2 gesetzt. Das führt einerseits mit der Verzögerung $\tau_2$ durch die Verzögerungsstufe VZ2 zum Sperrsignal INH und andererseits mit der Verzögerung $\tau_1$ durch die Verzögerungsstufe VZ1 zum Übernahmesignal ÜT, das zugleich als Rücksetzsignal RES die Steuerkippstufe FF1 zurücksetzt.

Obgleich im rückgesetzten Zustand der Steuerkippstufe FF1 bereits eine weitere Anforderung ANF0 ansteht, bleibt dies infolge des andauernden Sperrsignals INH, das durch das Rücksetzsignal RES aufrechterhalten wird, zunächst ohne Auswirkung, bis auch die Rückflanke des Setzausgangsignales der Steuerkippstufe FF1 die Verzögerungsstufe VZ1 durchlaufen hat und damit das Übernahmesignal ÜT und das Rücksetzsignal RES beendet wird, so daß um die Dauer $\tau_2$ verzögert auch das Sperrsignal INH wieder entfällt.

Erst ab Beginn der Rückflanke des Sperrsignals INH kann daher die Steuerkippstufe infolge einer vorliegenden Anforderung, z.B. ANF0, neu gesetzt und der Steuersignalzyklus erneut ausgelöst werden.

Wie aus dem Impulsdiagramm von FIG 3 ersichtlich, wird die Dauer eines solchen Arbeitszyklus für die Behandlung einer Anfrage im wesentlichen durch die zweifache Verzögerungsdauer $\tau_1$ der Verzögerungsstufe VZ1 oder allgemeiner durch die doppelte Laufdauer des Setzausgangssignals der Steuerkippstufe FF1 bis zum Wirksamwerden als Übernahmesignal ÜT zuzüglich der Verzögerungsdauer $\tau_2$ bestimmt. Die Verzögerung $\tau_2$ kann verhältnismäßig klein gehalten werden, da nur sicherzustellen ist, daß die Steuerkippstufe FF1 nach Einleiten eines Setzvorganges nicht zu früh gesperrt wird. Die Verzögerung $\tau_1$ braucht von der internen Steuerung her nur die Setzzeit der Markierkippstufe FF2 zu überbrücken. Diese Verzögerung wird aber praktisch z.B. von der Zeitdauer bestimmt, die die zentrale Einrichtung P-SP in FIG 1 braucht, um die jeweilige Anforderung entgegenzunehmen und die damit verbundene Funktion, z.B. einen Schreibvorgang im Pufferspeicher, auszuführen, sowie um eine Rückmeldung an die anfordernde Einrichtung abzusetzen, damit die Anforderung zurückgenommen wird. Diese Rücknahmen sind im Impulsdiagramm z.B. durch die mit $\overline{ANF1}$ und $\overline{ANF0}$ gekennzeichneten Pfeile angedeutet. Erst durch die rechtzeitige Rücknahme einer Anforderung vor der Entsperrung der Steuerkippstufe FF1 wird vermieden, daß ein und dieselbe Anforderung mehrfach berücksichtigt wird.

Ähnliche Verhältnisse ergeben sich, wenn statt nur zwei 2n verschiedene Anforderungsquellen zu überwachen sind. In diesem Falle erhöht sich die Anzahl der Markierkippstufen FF2 bei z.B. binärer Codierung auf n Kippstufen, also bei z.B. 16 Anforderungen auf vier Kippstufen, was gestrichelt im oberen Teil von FIG 2 dargestellt ist. Hinzu kommt ein Prioritätsnetzwerk PRIO zur Auswahl jeweils einer von mehreren gleichzeitig vorliegenden Anforderungen und ein nachgeschaltetes Codiernetzwerk COD zur Ansteuerung der Markierkippstufen FF2. Beide Netzwerke können in an sich bekannter Weise durch Gatterschaltungen realisiert sein, wobei die Laufzeiten möglichst klein sein sollten. Zur Überbrückung dieser Laufzeiten darf die Einstellung der Markierkippstufen FF2 nur entsprechend verzögert erfolgen, was die zusätzliche, gestrichelt gezeichnete Verzögerungsstufe VZ3 mit der Verzögerung $\tau_3$ am Ausgang der Steuerkippstufe FF1 sicherstellt. Beide Verzögerungsstufen VZ3 und VZ1 können dabei in Reihe wirksam sein, so daß im Impulsdiagramm von FIG 2 $\tau_1$ durch ($\tau_3 + \tau_1$) zu ersetzen wäre und die Markierkippstufen FF2 um $\tau_3$ verzögert gegenüber der Steuerkippstufe FF1 eingestellt würden.

Der weiterhin vorgesehene, gestrichelt gezeichnete Auswahlschalter MUX1 zusammen mit der nachgeschalteten Kontrollkippstufe FF3 und dem UND-Glied U3 ist erforderlich, wenn Anforderungen so dicht aufeinanderfolgend eintreffen können, daß dadurch vom Prioritätsnetzwerk PRIO und vom Codiernetzwerk COD bewirkte Signaländerungen sich mit der Einstellvorderflanke für die Markierkippstufen FF2 überschneiden können und dadurch gegebenenfalls eine Anforderung markiert wird, die gar nicht vorliegt. Das Übernahmesignal ÜT wird daher nur wirksam geschaltet, wenn die jeweils markierte Anforderung mit einer tatsächlich vorliegenden Anforderung übereinstimmt. Zu diesem Zweck sind die Anforderungsleitungen jeweils mit einem Eingang des Auswahlschalters MUX1 verbunden, und es wird anhand der von den Markierkippstufen FF2 gelieferten Markierung immer der jeweils ausgewählte Anforderungseingang auf den Ausgang des Auswahlschalters MUX1 durchgeschaltet und das ausgewählte Anforderungssignal in der Kontrollkippstufe FF3 gespeichert, was mit der Vorderflanke des von der Verzögerungsstufe VZ1 gelieferten Steuerimpulses ausgelöst wird. Nur wenn die Kontrollkippstufe FF3 gesetzt ist, kann das über die zusätzliche Verzögerungsstufe VZ4 zur Überbrückung der Einstellzeit der Kontrollkippstufe FF3 verlaufende Steuersignal das UND-Glied U3 durchlaufen und als Übernahmesignal ÜT wirksam werden.

Ist dagegen die Kontrollkippstufe FF3 nicht gesetzt und eine falsche Anforderung markiert, bleibt der Arbeitszyklus ohne Auswirkung und läuft gegebenenfalls mit Aufhebung des Sperrsignals INH erneut an.

Zugleich wird durch die zusätzlichen Schaltelemente verhindert, daß ein eine Anforderung vortäuschender Störimpuls ein Übernahmesignal ÜT auslöst, obwohl zu diesem Zeitpunkt gar keine Anforderung vorliegt.

In gleicher Weise könnte auch die einfache Schaltung für nur zwei Anforderungen ergänzt werden, wobei der Auswahlschalter MUX1 auf zwei UND-Glieder mit nachgeschaltetem ODER-Glied reduziert würde.

Insgesamt ergibt sich damit eine Schaltungsanordnung, die an verschiedene Randbedingungen in einfacher Weise anpaßbar ist und die mit zunehmender Anzahl von zu überwachenden Anforderungsquellen eine zunehmende Einsparung an Speicherkippstufen mit sich bringt.

## Patentansprüche

1. Schaltungsanordnung zur Auswertung von asynchron auftretenden Anforderungen wenigstens zweier verschiedener Einrichtungen für eine gemeinsame Einrichtung und zur Steuerung der Auswahl und der Übernahme der von den anfordernden Einrichtungen bereitgestellten Daten nacheinander durch die gemeinsame Einrichtung, indem jeweils eine der anstehenden Anforderungen identifiziert und eine entsprechende Identitätsmarkierung für die Auswahl der zugehörigen Daten zusammen mit einem Übernahmesignal für die gemeinsame Einrichtung erzeugt wird, **dadurch gekennzeichnet,** daß die Identitätsmarkierung (ANF-ID) einer ausgewählten Anforderung (z.B. ANF1) bei mehr als $2^{n-1}$ bis $2^n$ ($n = 1, 2, ...$) möglichen Anforderungen mit höchstens n bistabilen Markierungskippstufen (FF2) erfolgt, daß alle Anforderungen (ANF0 bis ANF2$^n$) durch ein gemeinsames ODER-Glied (OR1) überwacht werden, dem eine vom eigenen Setzausgangssignal sperrbare bistabile Steuerkippstufe (FF1) nachgeschaltet ist, die nur im ungesperrten Zustand (INH = 0) durch eine auf den Ausgang des ODER-Gliedes (OR1) durchgreifende Anforderung gesetzt und vom invertierten Anforderungssignal am Ende einer Anforderung zurückgesetzt werden kann, dagegen im Sperrzustand (INH = 1) den Setzzustand beibehält, bis ein gesondertes Rücksetzsignal (RES) wirksam wird, daß die Markierkippstufen (FF2) jeweils mit der Vorderflanke des Setzausgangssignals der Steuerkippstufe (FF1) eingestellt werden, daß das Rücksetzsignal (RES) der Steuerkippstufe (FF1) ebenfalls vom Setzausgangssignal der Steuerkippstufe (FF1) abgeleitet und als solches über eine Verzögerungsstufe (VZ1) verzögert wirksam wird, so daß die von einer Anforderung gesetzte und gesperrte Steuerkippstufe (FF1) jeweils nach einer durch die Verzögerung ($\tau_1$) bestimmten Dauer zurückgesetzt wird, wobei das Rücksetzsignal (RES) zugleich das Übernahmesignal (ÜT) bildet, das die Übernahme der durch die zum selben Zeitpunkt an den Ausgängen der Markierkippstufen (FF2) wirksame Identitätsmarkierung (ANF-ID) bestimmten Daten auslöst, daß das Rücksetzsignal (RES) wenigstens während seiner Dauer die Sperrung der Steuerkippstufe (FF1) aufrechterhält, so daß weitere Anforderungen erst nach Abklingen des Übernahmesignals (ÜT) von der Steuerkippstufe (FF1) berücksichtigt werden können.

2. Schaltungsanordnung nach Anspruch 1, **dadurch gekennzeichnet,** daß das Setzausgangssignal der Steuerkippstufe (FF1) und das davon abgeleitete verzögerte Rücksetzsignal (RES) einem ODER-Glied (OR2) zugeleitet werden, dem eine Verzögerungsstufe (VZ2) nachgeschaltet ist, die das Sperrsignal (INH) für die Steuerkippstufe (FF1) liefert.

3. Schaltungsanordnung nach Anspruch 1 oder 2, **dadurch gekennzeichnet,** daß zur Überwachung von lediglich zwei verschiedenen Anforderungen (ANF0 und ANF1) die Anforderungssignalleitung für die bevorrechtigte Anforderung (z.B. ANF1) mit dem Dateneingang einer einzigen Markierkippstufe (FF2) verbunden ist, deren Setzausgangssignal (A1) die jeweils auszuwählende Anforderung kennzeichnet.

4. Schaltungsanordnung nach Anspruch 1 oder 2, **dadurch gekennzeichnet,** daß zur Überwachung von mehr als zwei Anforderungen (z.B. ANF0 bis ANF2$^n$) alle Anforderungssignalleitungen mit den entsprechenden Eingängen eines Prioritätsnetzwerkes (PRIO) zur Auswahl jeweils einer Anforderung verbunden sind, daß dem Prioritätsnetzwerk (PRIO) ein Codiernetzwerk (COD) nachgeschaltet ist, das die "1 aus $2^n$"- Markierung in vorgegebener Weise (z.B. binär) codiert, und daß die Ausgänge des Codiernetzwerkes (COD) jeweils mit dem Dateneingang einer zugehörigen Markierkippstufe (FF2) verbunden sind, die mit ausreichender Verzögerung ($\tau_3$) durch eine Verzögerungsstufe (VZ3) durch das von der Steuerkippstufe (FF1) gelieferte Setzausgangssignal eingestellt wird.

5. Schaltungsanordnung nach Anspruch 4, **dadurch gekennzeichnet**, daß das Setzausgangssignal der Steuerkippstufe (FF1) zur Erzeugung des Rücksetzsignales (RES) und des Übernahmesignales (ÜT) die Verzögerungsstufen (z.B. VZ3 und VZ1) nacheinander durchläuft.

6. Schaltungsanordnung nach einem der Ansprüche 3 bis 5, **dadurch gekennzeichnet**, daß die Wirksamschaltung des Übernahmesignales (ÜT) zusätzlich von der gegebenen Übereinstimmung zwischen der durch die Markierkippstufen (FF2) markierten Anforderung und dem jeweils zugehörigen Anforderungssignal abhängig ist.

7. Schaltungsanordnung nach Anspruch 6, **dadurch gekennzeichnet**, daß die Anforderungssignaleingänge mit entsprechenden Eingängen eines Auswahlschalters (MUX1) verbunden sind, der abhängig von der Identitätsmarkierung (ANF-ID) am Ausgang der Markierkippstufen (FF2) die jeweils ausgewählte Anforderungssignalleitung auf den gemeinsamen Ausgang durchschaltet, daß dieser Ausgang mit dem Dateneingang einer bistabilen Kontrollkippstufe (FF3) verbunden ist, die jeweils mit der Vorderflanke des von der ersten Verzögerungsstufe (VZ1) gelieferten Übernahme- und Rücksetzsignales (ÜT/RES) eingestellt wird, und daß der Setzausgang der Kontrollkippstufe (FF3) mit dem Eingang eines UND-Gliedes (U3) verbunden ist, dessen zweitem Signaleingang das Einstellsignal für die Kontrollkippstufe (FF3) über eine die Einstelldauer überbrückende Verzögerungsstufe (VZ4) zugeführt wird, so daß unabhängig vom Rücksetzsignal (RES) für die Steuerkippstufe (FF1) ein Übernahmesignal (ÜT) nur ausgelöst wird, wenn für die markierte Anforderung auch tatsächlich eine Anforderung vorliegt.

**Claims**

1. Circuit for processing asynchronous requests from at least two different devices for a common device and for controlling the selection and the transfer of the data provided by the requesting devices successively by means of the common device in that in each case one of the requests occurring is identified and a corresponding identity marking is generated for the selection of the associated data together with a transfer signal for the common device, characterized in that the identity marking (ANF-ID) of a selected request (for example ANF1) occurs with more than $2^{n-1}$ to $2^n$ (n = 1, 2,...) possible requests with a maximum number of n bistable marking flipflops (FF2), that all requests (ANF0 to ANF2$^n$) are monitored by a common OR gate (OR1), which is followed by a bistable control flipflop (FF1) which can be inhibited by its own set output signal and which can only be set in the uninhibited state (INH = 0) by a request passing through to the output of the OR gate (OR1) and can be reset by the inverted request signal at the end of a request but in the inhibited state (INH = 1) retains the set state until a separate reset signal (RES) becomes effective, that the marking flipflops (FF2) are in each case set with the front edge of the set output signal of the control flipflop (FF1), that the reset signal (RES) of the control flipflop (FF1) is also derived from the set output signal of the control flipflop (FF1) and becomes effective as such with delay via a delay stage (VZ1) so that the control flipflop (FF1) set and inhibited by a request is in each case reset after a period determined by the delay ($\tau_I$), the reset signal (RES) at the same time forming the transfer signal (ÜT), which triggers the transfer of the data determined by the identity marking (ANF-ID) effective at the outputs of the marking flipflops (FF2) at the same time, that the reset signal (RES) maintains the inhibition of the control flipflop (FF1) at least for its duration so that further requests can only be taken into consideration by the control flipflop (FF1) after the transfer signal (ÜT) has decayed.

2. Circuit according to Claim 1, characterized in that the set output signal of the control flipflop (FF1) and the delayed reset signal (RES) derived from it are supplied to an OR gate (OR2) which is followed by a delay stage (VZ2) which supplies the inhibit signal (INH) for the control flipflop (FF1).

3. Circuit according to Claim 1 or 2, characterized in that, for monitoring only two different requests (ANF0 and ANF1), the request signal line for the request with the higher priority (for example ANF1) is connected to the data input of a single marking flipflop (FF2) the set output signal (A1) of which identifies the request to be selected in each case.

4. Circuit according to Claim 1 or 2, characterized in that, for monitoring more than two requests (for example ANF0 to ANF2$^n$) all request signal lines are connected to the corresponding inputs of a priority network (PRIO) for selecting in each case one request, that the priority network (PRIO) is followed by a coding network (COD) which codes the "1-of-$2^n$" marking in a predetermined manner (for example binary), and that the outputs of the coding network (COD) are in each case connected to the data input of an associated marking flipflop (FF2) which is set by the set output signal supplied by the control flipflop (FF1) with adequate delay ($\tau_3$) produced by a delay stage (VZ3).

5. Circuit according to Claim 4, characterized in that the set output signal of the control flipflop (FF1) successively passes through the delay stages (VZ3 and VZ1) for generating the reset signal (RES) and the transfer signal (ÜT).

6. Circuit according to one of Claims 3 to 5, characterized in that the activation of the transfer signal (ÜT) is additionally dependent on the given correspondence between the request marked by the marking flipflops (FF2) and the respectively associated request signal.

7. Circuit according to Claim 6, characterized in that the request signal inputs are connected to corresponding inputs of a selection switch (MUX1) which, in dependence on the identity marking (ANF-ID) at the output of the marking flipflops (FF2) switches the request signal line selected in each case through to the common output, that this output is connected to the data input of a bistable control flipflop (FF3) which is in each case set with the front edge of the transfer and reset signal (ÜT/RES) supplied by the first delay stage (VZ1), and that the set output of the control flipflop (FF3) is connected to the input of an AND gate (U3) the second input signal of which is supplied with the set signal for the control flipflop (FF3) via a delay stage (VZ4) bypassing the setting period so that, independently of the reset signal (RES) for the control flipflop (FF1), a transfer signal (ÜT) is only triggered if a request is actually present for the marked request.

## Revendications

1. Montage pour l'évaluation de demandes qui apparaissent de façon asynchrone et émanent d'au moins deux dispositifs différents, pour un dispositif commun et pour la commande de la sélection et le transfert, successifs, des données préparées par les dispositifs demandeurs, par le dispositif commun, grâce au fait que respectivement l'une des demandes qui se présentent est identifiée et un marquage correspondant d'identité est produit pour la sélection de données associées, conjointement avec un signal de transfert pour le dispositif commun, caractérisé par le fait que le marquage d'identité (ANF-ID) d'une demande sélectionnée (par exemple ANF1) est exécuté, dans le cas de plus de $2^{n-1}$ à $2^n$ (n = 1, 2, ...) demandes possibles, à l'aide d'au moins n étages à bascule bistable de marquage (FF2), que toutes les demandes (ANF0 à ANF2$^n$) sont contrôlées par un circuit OU (OR1) commun, en aval duquel est branché un étage à bascule bistable de commande (FF1), qui peut être bloqué par un signal particulier de sortie de positionnement, peut être positionné, uniquement à l'état non bloqué (INH = 0), par une demande apparaissant à la sortie du circuit OU (OR1) et peut être ramené à l'état initial par le signal de demande inversé, à la fin d'une demande, mais, dans le cas de l'état bloqué (INH = 1), conserve l'état positionné jusqu'à ce qu'un signal particulier de remise à l'état initial (RES) devienne actif, que les étages à bascule de marquage (FF2) sont positionnés respectivement par le flanc avant du signal de sortie de positionnement de l'étage à bascule de commande (FF1), que le signal de remise à l'état initial (RES) de l'étage à bascule de commande (FF1) est également dérivé du signal de sortie de positionnement de l'étage à bascule de commande (FF1) et devient actif, en tant que tel, en étant retardé par un étage de retardement (VZ1), de sorte que l'étage à bascule de commande (FF1) positionné et bloqué par une demande est ramené à l'état initial, respectivement au bout d'une durée déterminée par le retard ($\tau_I$), le signal de remise à l'état initial (RES) formant simultanément le signal de transfert (ÜT),

qui déclenche le transfert des données déterminées par le marquage d'identité (ANF-ID), qui devient actif au même instant au niveau des sorties des étages à bascule de marquage (FF2), et que le signal de remise à l'état initial (RES) maintient, au moins pendant sa durée, le blocage de l'étage à bascule de commande (FF1) de sorte que d'autres demandes peuvent être prises en compte par l'étage à bascule de commande (FF1), uniquement après l'évanouissement du signal de transfert (ÜT).

2. Montage suivant la revendication 1, caractérisé par le fait que le signal de sortie de positionnement de l'étage à bascule de commande (FF1) et le signal de remise à l'état initial (RES), retardé et dérivé du signal précédent, sont envoyés à un circuit OU (OR2), en aval duquel est branché un étage de retardement (VZ2), qui délivre le signal de blocage (INH) pour l'étage à bascule de commande (FF1).

3. Montage suivant la revendication 1 ou 2, caractérisé par le fait que pour le contrôle de seulement deux demandes différentes (ANF0 et ANF1), la ligne de transmission de signaux de demande est reliée, pour la demande prioritaire (par exemple ANF1), à une entrée d'un seul étage à bascule de marquage (FF2), dont le signal de sortie de positionnement (A1) caractérise la demande devant être respectivement sélectionnée.

4. Montage suivant la revendication 1 ou 2, caractérisé par le fait que pour le contrôle de plus de deux demandes (par exemple ANF0 à ANF2$^n$), toutes les lignes de transmission de signaux de demande sont reliées aux entrées correspondantes d'un réseau de priorité (PRIO) servant à sélectionner une demande respective, qu'en aval du réseau de priorité (PRIO) est branché un réseau de codage (COD), qui code d'une manière prédéterminée (par exemple en binaire) le marquage "1 parmi 2$^n$", et que les sorties du réseau de codage (COD) sont reliées respectivement à l'entrée de données d'un étage à bascule de marquage (FF2) associé, qui est réglé, avec un retard suffisant ($\tau_3$) produit par un étage de retardement (VZ3), par le signal de sortie de positionnement, délivré par l'étage à bascule de commande (FF1).

5. Montage suivant la revendication 4, caractérisé par le fait que le signal d'entrée de positionnement de l'étage à bascule de commande (FF1) rend successivement actifs les étages de retardement (VZ3 et VZ1), pour la production du signal de remise à l'état initial (RES) et du signal de transfert (ÜT).

6. Montage suivant l'une des revendications 3 à 5, caractérisé par le fait que l'activation du signal de transfert (ÜT) dépend, en outre, de la coïncidence déterminée entre la demande marquée au moyen des étages à bascule de marquage (FF2), et du signal de demande respectivement associé.

7. Montage suivant la revendication 6, caractérisé par le fait que les entrées des signaux de demande sont reliées à des entrées correspondantes d'un commutateur de sélection (MUX1), qui, en fonction du marquage d'identité (ANF-ID) apparaissant à la sortie des étages à bascule de marquage (FF2), interconnecte directement la ligne, respectivement sélectionnée, de transmission de signaux de demande à la sortie commune, que cette sortie est reliée à l'entrée de données d'un étage à bascule bistable de commande (FF3), qui est réglé respectivement par le flanc avant du signal de transfert et du signal de remise à l'état initial (ÜT/ RES), qui sont délivrés par le premier étage de retardement (VZ1), et que la sortie de positionnement de l'étage à bascule de contrôle (FF3) est reliée à l'entrée d'un circuit ET (U3), à la seconde entrée des signaux duquel le signal de réglage pour l'étage à bascule de contrôle (FF3) est envoyé par l'intermédiaire d'un étage de retardement (VZ4), qui produit un retard englobant la durée de réglage, de sorte que, indépendamment du signal de remise à l'état initial (RES) pour l'étage à bascule de commande (FF1), un signal de transfert (ÜT) est déclenché uniquement lorsqu'une demande est également effectivement présente pour la demande marquée.

# F I G 1

# F I G 3

FIG 2

EP 0 176 791 B1